# EUROPEAN PATENT SPECIFICATION

(11) **EP 1 339 562 B1**
(45) Date of publication and mention of the grant of the patent: **14.07.2004**
(21) Application number: 01998459.0
(22) Date of filing: 26.11.2001
(51) Int. Cl.: B60M 1/18, B60M 1/30

(54) **CONDUCTOR RAIL ARC SUPPRESSION**
STROMSCHIENEN LICHTBOGENUNTERDRÜCKER
EXTINCTEUR D'ARC POUR RAIL CONDUCTEUR

(30) Priority: 30.11.2000 GB 0029235
(43) Date of publication of application: 03.09.2003
(73) Proprietor: Infraco BCV Limited, London SW1H 0BD (GB)
(72) Inventor: NOLAN, Joseph, Staines Middlesex TW19 5ES (GB)
(74) Representative: Smith, Norman Ian
(86) International application number: PCT/GB2001/005196
(87) International publication number: WO 2002/043983

(56) References cited:
- CH-A- 263 180
- US-A- 5 810 137

## Description

This invention relates to conductor rails which are used to supply electrical power to vehicles such as underground trains and in particular to an arc suppression apparatus for use with such rails as defined in the preamble of claim 1. Such a suppression apparatus is known from US-A-5,810,137, for instance.

Conductor rails are used to supply electrical energy to electrically powered vehicles such as underground trains. An underground train has a pick-up shoe which runs along the upper surface of a conductive rail to enable electrical energy to be conducted from the rail to the power unit of the train. Conductor rails have finite lengths and gaps exist between successive lengths of conductor rail. Thus at the end of a conductor rail, the pick-up shoe disengages from the rail and during such disengagement arcing can occur. Conventional conductor rails have a ramp at their end to provide a smooth and gradual disengagement of the shoe from the conductor rail, but even with such existing ramps arcing still occurs. Arcing is not necessarily a hazard in itself, but if it occurs in areas where combustible material such as dry leaves or litter exist then there is a potential fire hazard.

The present invention is defined in claim 1 and is concerned with a ramp construction which is attachable to the end of a conductor rail and is designed to suppress the effects of arcing.

Dependent claims 2-7 define preferred embodiments of the invention.

The invention will be described now by way of example only, with particular reference to the accompanying drawings. In the drawings:

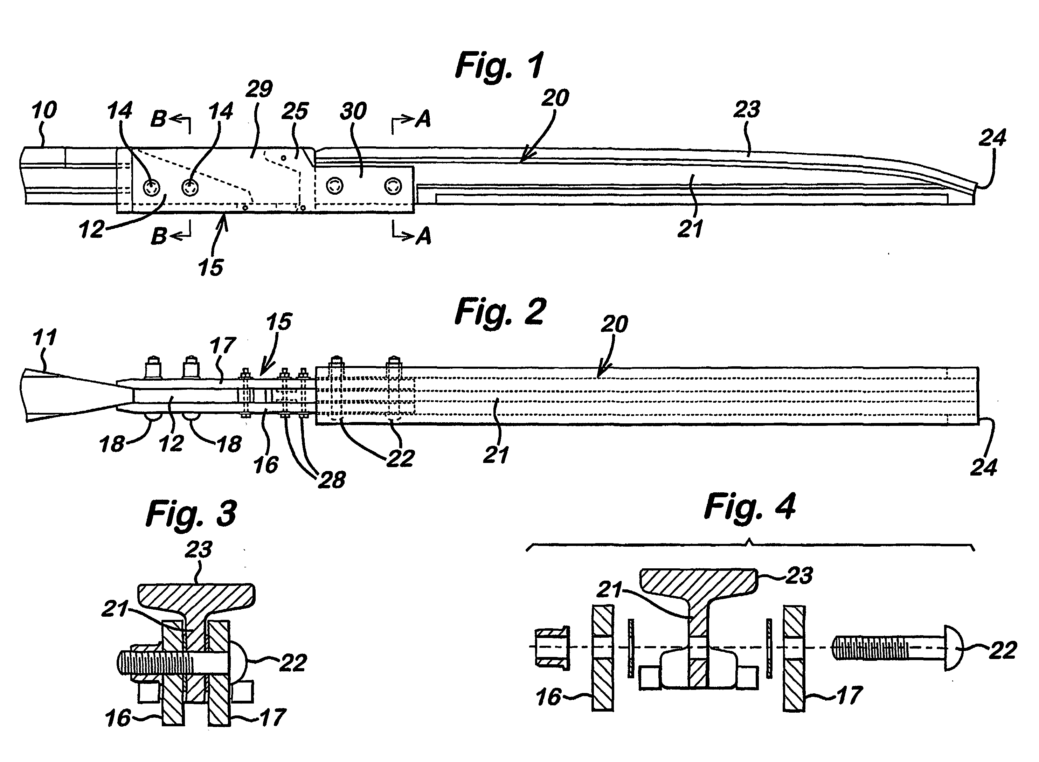

Figure 1 is a side elevation of the end of a conductor rail incorporating an arc suppression apparatus in accordance with an embodiment of the present invention;
Figure 2 is a plan view of the arrangement of Figure 1;
Figure 3 is a section along line A-A of Figure 1;
Figure 4 is an exploded view of the assembly of Figure 3;

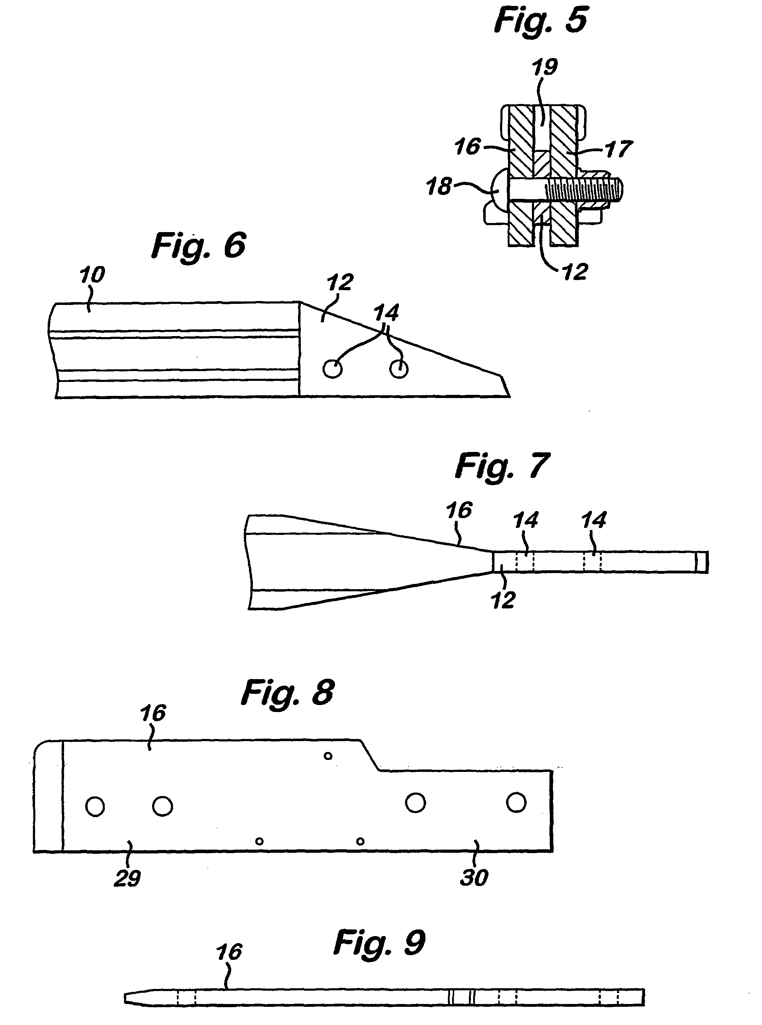

Figure 5 is a section along the line B-B of Figure 1;
Figure 6 is a side elevation showing the end of the conductor rail;
Figure 7 is a plan view of the arrangement of Figure 6;
Figure 8 is a side elevation showing part of the insulating member, and
Figure 9 is a plan view of the member shown in Figure 8.

Referring to the drawings the end of a conductor rail is shown at (10). The end of the conductor rail has a tapered portion shown at (11) and the end face of the tapered portion (11) has welded thereto a generally triangular plate (12) which is formed from mild steel. The plate (12) has formed therein two through holes (14).

The conductor rail (10) and its attached plate (12) are connected to a ramp member (20) by an insulating assembly (15). The insulating assembly (15) includes a pair of generally planar elements (16, 17) which are secured to opposite sides of the plate (12) at one end thereof by means of huck bolts (18). The planar elements (16, 17) are formed from insulating material, preferably Permalli Mer20 and are spaced apart so that an axially extending channel (19) is formed therebetween. The other end of the planar members (16, 17) are secured to opposite side faces of the web (21) of the ramp member (20) by means of huck bolts (22). It will be seen that the upper surface (23) of the ramp member is generally flat and inclines downwardly and gradually towards its end (24).

An in-fill member (25) is disposed between the planar members (16, 17) adjacent the end face of the ramp member (20). The in-fill member (25) which is formed of the same insulating material as the planar members (16, 17) is secured thereto by means of high tensile bolts (28).

It will be seen that each planar member (15, 16) has a first relatively deep section (29) whose upper edge surface effectively forms a continuation of the conductor rail (10) and a second relatively shallow portion (30) which locates alongside the web of the ramp member (20). Also the material from which the insulating members (16, 17) are formed is designed to have wear characteristics which correspond as closely as possible to those of the conductor rail (10) and the ramp member (20).

In use as a contact shoe moves towards the end of the conductor rail (10) it contacts the tapered portion (11) and moves on to the arc suppression apparatus which includes the insulating assembly (15). The insulating assembly (15) isolates the conductor rail (10) from the ramp member (20) and any arcing which occurs as the contact shoe leaves the conductor rail (10) is drawn down into the channel (19) between the insulating members (15, 16) by the triangular plate (12) which acts as an arc draw down surface. Thus, any arcing which occurs is confined and rapidly quenched in the space between the insulating members (16, 17) and this effectively minimises the likelihood of the arc affecting any external material such as leaves or litter. Thus this construction reduces considerably both the fire risk and environmental disturbance associated with arcing.

By the time the contact shoe reaches the ramp (20) it has disengaged electrically from the conductor rail and therefore arcing will not occur beyond that stage. The ramp member (20) is retained to provide a mechanical run-off/smooth disengagement of the contact shoe from the conductor rail.

## Claims

1. An arc suppression apparatus (15) for attachment to the end of a conductor rail (10) to suppress the effect of arcing which can occur between the end of the rail and a contact element running along the rail, said apparatus comprising an insulating assembly (15) which is attachable to the end of the conductor rail so that in use it is located against the rail end, **characterised in that** said insulating assembly including a channel (19) into which any arc which is generated as the contact element disengages from the rail is directed, said channel including a conductive plate (12) which in use is attached to the end of the conductor rail and which has an inclined surface which acts as a draw down surface to draw the arc into the channel.

2. An arc suppression apparatus according to claim 1 including a ramp member which defines a ramp surface which in use provides a gradually increasing gap between it and said contact element as the contact element moves along its length, said insulating assembly, in use, being attached to the ramp member and electrically isolating it from the conductor rail.

3. Apparatus according to claim 1 or claim 2, wherein the channel extends axially of the insulating member.

4. Apparatus according to any preceding claim, wherein the insulating material from which the insulating assembly is formed is selected so that its wear characteristics are as far as possible similar to those of the conductor rail and ramp member.

5. Apparatus according to claim 4, wherein the material is Permalli Mer20.

6. Apparatus according to any preceding claim, wherein the width of the conductor rail tapers towards its end so that its end face has a width corresponding substantially to the lateral dimension of the channel in the insulating member.

7. Apparatus according to any preceding claim, wherein the channel is defined between a pair of plate-like elements formed of insulating material which are secured to opposite sides of the conductor rail at one end and to opposite sides of the ramp member at their other end.

## Patentansprüche

1. Lichtbogenunterdrückungsvorrichtung (15) zur Befestigung an dem Ende einer Stromschiene (10), um den Effekt der Lichtbogenbildung zu unterdrücken, welche zwischen dem Ende der Stromschiene und einem entlang der Schiene laufenden Kontaktelement auftreten kann, wobei die Vorrichtung eine isolierende Baugruppe (15) aufweist, welche an dem Ende der Stromschiene so befestigbar ist, daß sie im Einsatz dem Schienenende gegenüberliegt, **dadurch gekennzeichnet, daß** die isolierende Baugruppe einen Kanal (19) enthält, in welchen jeder Lichtbogen, welcher erzeugt wird, wenn sich das Kontaktelement von der Schiene löst, geführt wird, wobei der Kanal eine leitfähige Platte (12) enthält, welche im Einsatz an dem Ende der Stromschiene befestigt ist, und welche eine schräge Oberfläche besitzt, welche als eine Herunterziehoberfläche wirkt, um den Lichtbogen in den Kanal zu ziehen.

2. Lichtbogenunterdrückungsvorrichtung nach Anspruch 1 mit einem Rampenelement, welches eine Rampenoberfläche ausbildet, welche im Einsatz einen sich allmählich vergrößernden Spalt zwischen sich und dem Kontaktelement bereitstellt, wenn sich das Kontaktelement entlang seiner Länge bewegt, wobei die isolierende Baugruppe im Einsatz an dem Rampenelement befestigt ist und es elektrisch von der Stromschiene isoliert.

3. Lichtbogenunterdrückungsvorrichtung nach Anspruch 1 oder 2, wobei sich der Kanal axial zu dem Isolationselement erstreckt.

4. Lichtbogenunterdrückungsvorrichtung nach einem der vorstehenden Ansprüche, wobei das isolierende Material, aus welchem die isolierende Baugruppe aufgebaut ist, so ausgewählt ist, daß dessen Verschleißeigenschaften soweit wie möglich denen der Stromschiene und des Rampenelementes ähnlich sind.

5. Lichtbogenunterdrückungsvorrichtung nach Anspruch 4, wobei das Material Permalli Mer20 ist.

6. Lichtbogenunterdrückungsvorrichtung nach einem der vorstehenden Ansprüche, wobei die Breite der Stromschiene sich zu ihrem Ende hin so verjüngt, daß ihre Endfläche eine Breite besitzt, die im wesentlichen der seitlichen Abmessung des Kanals in dem Isolationselement entspricht.

7. Lichtbogenunterdrückungsvorrichtung nach einem der vorstehenden Ansprüche, wobei der Kanal zwischen einem Paar aus isolierendem Material gebildeten plattenartiger Elementen, welche an gegenüberliegenden Seiten der Stromschiene an einem Ende und an gegenüberliegenden Seiten des Rampenelementes an ihrem anderem Ende befestigt sind, ausgebildet ist.

## Revendications

1. Appareil extincteur d'arc (15) pour la fixation sur l'extrémité d'un rail conducteur (10) pour supprimer l'effet d'arc qui peut se produire entre l'extrémité du rail et un élément de contact se déplaçant le long du rail, ledit appareil comprenant un ensemble isolant (15) qui peut être fixé sur l'extrémité du rail conducteur de sorte que dans l'utilisation il est situé contre l'extrémité du rail, **caractérisé en ce que** ledit ensemble isolant incluant un profilé en U (19) dans lequel est dirigé tout arc qui est généré lorsque l'élément de contact se libère du rail, ledit profilé en U comprenant une plaque conductrice (12) qui, dans l'utilisation, est fixée sur l'extrémité du rail conducteur et qui présente une surface inclinée qui agit comme une surface d'attraction pour attirer l'arc dans le profilé en U.

2. Appareil extincteur d'arc selon la revendication 1, incluant un élément de rampe qui définit une surface de rampe qui, dans l'utilisation, fournit un espace augmentant progressivement entre celui-ci et l'élément de contact à mesure que l'élément de contact se déplace sur sa longueur, ledit ensemble isolant, dans l'utilisation, étant fixé sur l'élément de rampe et l'isolant électriquement du rail conducteur.

3. Appareil selon la revendication 1 ou la revendication 2, dans lequel le profilé en U s'étend axialement par rapport à l'élément isolant.

4. Appareil selon l'une quelconque des revendications précédentes, dans lequel l'élément isolant à partir duquel est formé l'ensemble isolant est sélectionné de telle sorte que ses caractéristiques d'usure sont dans la mesure du possible similaires à celles du rail conducteur et de l'élément de rampe.

5. Appareil selon la revendication 4, dans lequel le matériau est le Permalli Mer20.

6. Appareil selon l'une quelconque des revendication précédentes, dans lequel la largeur du rail conducteur va en s'amenuisant vers son extrémité de sorte que sa face d'extrémité présente une largeur correspondant sensiblement à la dimension latérale du profilé en U dans l'élément isolant.

7. Appareil selon l'une quelconque des revendications précédentes, dans lequel le profilé en U est défini entre une paire d'éléments en forme de plaque constitués de matériau isolant qui sont fixés sur les côtés opposés du rail conducteur sur une extrémité et sur les côtés opposés de l'élément de rampe sur leur autre extrémité.
